# EUROPÄISCHE PATENTSCHRIFT

(11) **EP 3 172 425 B1**
(45) Veröffentlichungstag und Bekanntmachung des Hinweises auf die Patenterteilung: **17.10.2018**
(21) Anmeldenummer: 15723982.3
(22) Anmeldetag: 29.05.2015
(51) Int. Cl.: F02M 26/19, F02M 35/10, F02M 35/112, F02B 29/04

(54) **ANSAUGMODUL MIT INTEGRIERTER ABGASRÜCKFÜHRUNG FÜR EINE BRENNKRAFTMASCHINE**
INTAKE MODULE HAVING INTEGRATED EXHAUST GAS RECIRCULATION FOR AN INTERNAL COMBUSTION ENGINE
MODULE D'ASPIRATION POURVU D'UNE RECIRCULATION DE GAZ D'ÉCHAPPEMENT INTÉGRÉE POUR MOTEUR À COMBUSTION INTERNE

(30) Priorität: 24.07.2014 DE 102014214591
(43) Veröffentlichungstag der Anmeldung: 31.05.2017
(73) Patentinhaber: Mahle International GmbH, 70376 Stuttgart (DE)
(72) Erfinder: ELFLEIN, Simon, 76228 Karlsruhe (DE); NAUJOKS, Sascha, 76327 Pfinztal (DE); SCHNEIDER, Simon, 70191 Stuttgart (DE)
(74) Vertreter: BRP Renaud & Partner mbB Rechtsanwälte Patentanwälte Steuerberater
(86) Internationale Anmeldenummer: PCT/EP2015/061965
(87) Internationale Veröffentlichungsnummer: WO 2016/012129

(56) Entgegenhaltungen:
- WO-A1-2011/120932
- FR-A1- 2 946 698
- FR-A1- 2 965 306
- FR-A1- 2 967 215
- GB-A- 2 386 158
- JP-U- S5 915 976
- US-A- 4 445 487
- US-A1- 2012 103 296

## Beschreibung

Die vorliegende Erfindung betrifft ein Ansaugmodul mit integrierter Abgasrückführung für eine Brennkraftmaschine.

Ansaugmodule für Brennkraftmaschinen dienen zum Ansaugen und Einbringen von Luft aus der Umgebung in die Brennkammer der Brennkraftmaschine. Grundsätzlich können in solche Ansaugmodule ein oder mehrere Funktionselemente des Ansaugtrakts der Brennkraftmaschine integriert sein, um der Tatsache Rechnung zu tragen, dass in einem Kraftfahrzeug nur in begrenztem Maße Bauraum vorhanden ist. Bekannt sind Konzepte, bei denen eine sog. Abgasrückführung in das besagte Ansaugmodul integriert wird. Generell dient die Abgasrückführung zur Reduktion der von der Brennkraftmaschine betriebsmäßig in die Umgebung abgegebenen Schadstoffe und basiert auf der Idee, einen Teil des beim Verbrennungsvorgang erzeugten Abgases mit der vom Ansaugmodul angesaugten Frischluft zu vermischen und erneut in die Brennkammer einzubringen. Solche Abgasrückführungssysteme werden etwa in Verbindung mit einem Abgasturbolader ausgeführt. Der Stand der Technik umfasst sogenannte Hochdruck- oder Niederdruck-Rückführungssystemen, je nachdem, an welcher Stelle im Ansaug- bzw. Abgastrakt der Brennkraftmaschine die Abgasrückführung erfolgt.

Als problematisch bei solchen Abgasrückführungssystemen erweist sich indes der im Kraftfahrzeug nur begrenzt zur Verfügung stehende Bauraum, welcher häufig einer optimalen Durchmischung des rückgeführten Abgases mit angesaugter Frischluft entgegensteht. Nur schwierig sicherzustellen ist vor diesem Hintergrund auch eine vorteilhafte, möglichst gleichmäßige Verteilung des rückzuführenden Abgases auf die verschiedenen Zylinder der Brennkraftmaschine. Denn in Ansaugmodulen mit konventioneller Leitungsgeometrie tritt oft die Situation auf, dass einzelne Zylinder aufgrund unterschiedlicher Leitungswege und Leitungs-Geometrien, die das rückzuführende Abgas beim Einleiten in die unterschiedlichen Zylinder zurücklegen muss, mit Abgas über- oder unterversorgt werden.

In diesem Zusammenhang offenbart die EP 1 122 421 A2 ein Saugrohr mit integriertem Abgasrückführungssystem für eine Brennkraftmaschine. Das Saugrohr umfasst einen Sammelraum für aus der Umgebung angesaugte Frischluft. In den Sammelraum mündet eine Abgasleitung, welche mit rückzuführendem Abgas durchströmt wird. Der Sammelraum besitzt einen Lufteinlass, welcher mit den entsprechenden Öffnungen in der Abgasleitung einen Winkel von im Wesentlichen 90° ausbildet.

Aus der DE 103 54 129 A1 ist eine Sauganlage für eine Brennkraftmaschine mit einem Frischgasverteiler bekannt. Der Frischgasverteiler umfasst mehrere Frischgasaustritte, wobei ein jeder solcher Frischgasaustritt einem bestimmten Zylinder der Brennkraftmaschine zugeordnet ist. Benachbart zum Frischluftverteiler ist ein Verteilerkanal einer Abgasrückführung vorgesehen, der mit dem Frischluftverteiler fluidisch kommuniziert.

Die US 5,957,116 beschreibt ein Abgasrückführungssystem für eine Brennkraftmaschine. Das Abgasrückführungssystem umfasst eine Abgasleitung mit mehreren Abgasaustrittsöffnungen, die in einer Umfangswand der Abgasleitung vorgesehen sind. Die Abgasleitung erstreckt sich innerhalb einer Ansaugleitung für Frischluft; Ansaugleitung und Abgasleitung erstrecken sich im Wesentlichen parallel zueinander.

Die FR 2 967 215 A1 offenbart ein Ansaugmodul mit einer Durchmischungskammer für Frischluft und Abgas. Das Ansaugmodul besitzt eine integrierte Abgasverteilungsleitung. In diese Abgasverteilungsleitung das der Durchmischungskammer zuzuführende Abgas außermittig eingeleitet wird.

Hauptaufgabe der vorliegenden Erfindung ist die Bereitstellung einer verbesserten Ausführungsform eines Ansaugmoduls mit integrierter Abgasrückführung, welches insbesondere eine besonders gleichmäßige Durchmischung des rückzuführenden Abgases mit Frischluft gewährleistet, so dass eine Über- oder Unterversorgung einzelner Zylinder gegenüber den verbleibenden Zylindern mit rückzuführendem Abgas möglichst vermieden werden kann.

Diese Aufgabe wird durch den Gegenstand des unabhängigen Anspruchs 1 gelöst. Bevorzugte Ausführungsformen sind Gegenstand der abhängigen Patentansprüche.

Grundgedanke der Erfindung ist demnach, Abgas über eine im Wesentlichen symmetrisch realisierte Abgas-Zuführungsleitung in diese einzuleiten. Auf diese Weise stellen sich besonders gleichmäßige Druckverhältnisse ein, so dass sich auch eine vorteilhafte, vergleichmäßigte Einleitung des Abgases in die Durchmischungskammer ergibt.

Dieser Grundgedanke ist in einem erfindungsgemäßen Ansaugmodul realisiert. Dieses umfasst ein einen Gehäuseinnenraum begrenzendes Gehäuse, welches eine erste Gehäusewand mit wenigstens einem Lufteinlass und zweite Gehäusewand mit wenigstens einem Fluidauslass aufweist. Im Gehäuseinnenraum des Gehäuses ist ein Ladeluftkühler angeordnet. Im Gehäuse ist ferner eine Durchmischungskammer ausgebildet. Diese ist Teil des Gehäuseinnenraums und wird durch den Ladeluftkühler und die zweite Gehäusewand mit dem wenigstens einen Fluidauslass begrenzt. In der Durchmischungskammer ist eine Abgas-Verteilungsleitung angeordnet, welche sich entlang einer Querrichtung der Durchmischungskammer erstreckt. In der Abgas-Verteilungsleitung sind auf einer dem Lufteinlass zugewandten Seite der Abgas-Verteilungsleitung wenigstens ein erster und ein zweiter Abgasauslass vorgesehen, mittels welchen das aus der Brennkraftmaschine abgeführte und die Abgas-Verteilungsleitung durchströmende Abgas in die Durchmischungskammer einbringbar ist. Weiterhin umfasst das Ansaugmodul eine Abgas-Zuführungsleitung, die über einen an der Abgas-Verteilungsleitung vorgesehenen Fluiddurchlass fluidisch mit dieser kommuniziert. Erfindungsgemäß ist der Fluiddurchlass bezüglich der Querrichtung im Wesentlichen mittig in der Abgas-Verteilungsleitung und/oder in der Durchmischungskammer angeordnet. Eine derartige, mittige Anordnung des Fluiddurchlasses bewirkt, dass das über diesen Fluiddurchlass in die Abgas-Zuführungsleitung eingebrachte Abgas sich in beide Leitungsbereiche der Abgas-Zuführungsleitung verteilen kann, von wo aus es über Abgasauslässe in die Durchmischungskammer eingeleitet werden kann.

Erfindungsgemäß verläuft die Strömungsrichtung des in die Durchmischungskammer eingebrachten Abgases entgegengesetzt zur Strömungsrichtung der in die Durchmischungskammer eingebrachten Frischluft. Folglich bilden die beiden Richtungen einen Winkel von im Wesentlichen 180° zueinander aus. Unter "im Wesentlichen" ist dabei ein Winkelintervall von 160° bis 200, vorzugsweise von 170° bis 190° zu verstehen. Eine besonders gute Durchmischung der Frischluft mit Abgas wird jedoch gewährleistet, wenn Luft- und. Abgasmoleküle unter einem Winkel von möglichst genau 180° aufeinander treffen, denn in diesem Fall weisen die Luft- bzw. Abgasmoleküle beim Aufeinandertreffen einen zueinander entgegengesetzten Impuls auf, was deren Durchmischung besonders stark fördert. Weiterhin ist der Abstand zwischen Abgas-Verteilungsleitung und Frischluft an jeder Stelle gleich, wodurch sich eine, über den gesamten Querschnitt gleiche, Durchmischung einstellt.

In einer bevorzugten Ausführungsform wird durch eine virtuelle Verbindungslinie zwischen dem wenigstens einen Lufteinlass und dem wenigstens einen Fluidauslass eine Längsrichtung definiert, die sich orthogonal zur Querrichtung erstreckt. Dabei erstreckt sich die Abgas-Zuführungsleitung zumindest abschnittsweise in einer Ebene, die durch die Längsrichtung und eine orthogonal sowohl zur Längsals auch Querrichtung erstreckende Hochrichtung definiert ist und in der auch der Fluiddurchlass angeordnet ist. Eine derartige Anordnung der Abgas-Zuführungsleitung führt zu einer vorteilhaften, besonders gleichmäßigen Einleitung von Abgas in die Durchmischungskammer erzielt. Alternativ dazu kann sich die Abgas-Zuführungsleitung auch in einer durch die Querrichtung und die Hochrichtung definierten Ebene, in welcher der Fluiddurchlass angeordnet ist, erstrecken.

Besagte Längsrichtung kann in Varianten auch auf andere Weise definiert sein, etwa durch eine Hauptströmungsrichtung der Frischluft in der Durchmischungskammer, unmittelbar bevor die Frischluft auf das aus der Abgas-Verteilungsleitung in die Durchmischungskammer eingeleitete Abgas trifft.

Bei einer vorteilhaften Ausgestaltung der Erfindung ist der Abstand zwischen der Abgas-Verteilungsleitung und dem Ladeluftkühler derart gewählt, dass das ausströmende Abgas den Ladeluftkühler gerade noch anströmt, jedoch nicht mehr in den Ladeluftkühler eindringt. Somit legt das eingeleitete Abgas die Distanzstrecke zwischen Abgaseinleitung und Ladeluftkühler zwei Mal zurück, wobei sich das Abgas beim Strömen entgegen der Ladeluftströmung bereits mit dieser vermischt und die Vermischung bei dem Zurückströmen bis zu der Abgas-Verteilungsleitung weiterschreitet. In dem Bereich nach der Abgas-Verteilungsleitung vermischt sich das Abgas weiterhin mit der Ladeluft, wodurch eine sehr homogene Durchmischung erreicht wird, bevor das Gasgemisch in die zu den einzelnen Zylinder führenden Auslässe eintritt. Somit wird eine Verunreinigung des Ladeluftkühlers verhindert und eine maximale Mischstrecke mit einer homogenen Durchmischung der Gase gebildet.

Gemäß einer besonderen Ausgestaltung der Erfindung entspricht der Abstand zwischen der Abgas-Verteilungsleitung und dem Ladeluftkühler dem Abstand der Abgas-Verteilungsleitung zu der zweiten Gehäusewand, in der die Fluidauslässe zu den Zylindern angeordnet sind. Durch eine solche Ausgestaltung kann die zur Verfügung stehende Mischlänge in der Durchmischungskammer verlängert werden.

Bei anderen Ausführungen kann der Abstand von der Abgas-Verteilungsleitung zum Ladeluftkühler größer oder kleiner sein als der Abstand zwischen der Abgas-Verteilungsleitung und besagter Gehäusewand. Entsprechend der Auslegung kann so eine Vervielfachung, z. B. Verdopplung oder Verdreifachung, der Mischlänge erreicht werden.

Bei besonderen Ausgestaltungen beträgt der Abstand zwischen der Abgas-Verteilungsleitung und dem Ladeluftkühler ca. 2 - 15 cm, vorzugsweise ca. 4 - 5 cm.

Für den Fachmann fertigungstechnisch besonders einfach gestaltet sich die Realisierung der Ladeluftkühlereinheit in Form eines Kühlmittelrohrs. Ein solches Kühlmittelrohr kann stirnseitig jeweils einen Kühlmitteleinlass bzw. Kühlmittelauslass aufweisen. Alternative Ladeluftkühler können als Rohrbündelkühler oder Rippe-Rohr-Kühler ausgebildet sein, in welchen jeweils wenigstens ein Kühlmittelpfad vorgesehen ist. Ein derartig ausgebildeter Ladeluftkühler kann an einer stirnseitigen Gehäusewand seines Kühlergehäuses einen Kühlmitteleinlass und einen Kühlmittelauslass aufweisen und bezüglich des Kühlmittelpfads im Wesentlichen parallel zur Abgas-Verteilungsleitung in der Durchmischungskammerangeordnet sein. In der Folge stellt sich eine besonders gleichmäßige Vermischung von Frischluft und Abgas in der Durchmischungskammer ein.

In einer anderen bevorzugten Ausführungsform ist der Fluiddurchlass in Querrichtung zwischen dem ersten und dem zweiten Abgasauslass angeordnet ist. Dies fördert die Gleichverteilung des durch die Abgas-Verteilungsleitung strömenden Abgases auf die beiden Abgasauslässe.

In einer besonders bevorzugten Ausführungsform umfasst die Abgas-Verteilungsleitung des erfindungsgemäßen Ansaugmoduls eine gerade Anzahl an Abgasauslässen, wobei wenigstens vier solcher Abgasauslässe vorgesehen sind. Besonders empfiehlt es sich, für jeden Zylinder der mit dem Ansaugmodul zusammenwirkenden Brennkraftmaschine genau einen Abgasauslass vorzusehen. In einem 4-Zylinder-Motor ist somit ein jeder der dann vier Abgasauslässe einem bestimmten Zylinder zugeordnet. Die Bereitstellung einer geraden Anzahl an Abgasauslässen gestattet es, den Fluiddurchlass - dem erfindungsgemäßen Gedanken folgend - symmetrisch zwischen den Abgasauslässen anzuordnen. Mit anderen Worten ausgehend vom Fluiddurchlass, durch welchen das Abgas in die Abgas-Verteilungsleitung eingebracht wird, kann dann in und entgegen der Querrichtung jeweils dieselbe Anzahl an Abgasauslässen vorgesehen werden.

Um möglichst identische Laufwege für das über den Fluiddurchlass in die Abgas-Verteilungsleitung eingetretene Abgas sicherzustellen, unabhängig davon, ob es durch den ersten oder den zweiten Abgasauslass in die Durchmischungskammer eintritt, wird in einer weiteren bevorzugten Ausführungsform vorgeschlagen, den Fluiddurchlass bezüglich der Querrichtung mittig in der Abgas-Verteilungsleitung anzuordnen.

In einer weiteren vorteilhaften Ausführungsform, in welcher der erfindungswesentliche und vorteilhafte Gedanke eines hochsymmetrischen Aufbaus weitergeführt wird, ist durch die Längs- und die Querrichtung eine Querschnittsebene des Ansaugmoduls definiert. Die Anordnung der Abgas-Verteilungsleitung und der Abgas-Zuführungsleitung zueinander sowie die Anordnung der beiden Leitungen relativ zur Durchmischungskammer erfolgt in diesem Szenario derart, dass die Abgas-Verteilungsleitung und die Abgas-Zuführungsleitung in diesem Querschnitt symmetrisch, insbesondere achsensymmetrisch, zu einer Symmetrieachse angeordnet sind, welche entlang der Längsrichtung verläuft und die Abgas-Verteilungsleitung bezüglich der Querrichtung mittig kreuzt.

Besonders zweckmäßig mögen die Abgas-Verteilungsleitung und die Abgas-Zuführungsleitung im Querschnitt des Ansaugmoduls derart zueinander angeordnet sein, dass im Zusammenspiel eine T-artige Geometrie gebildet wird.

Ein unerwünschtes Aufstauen von Abgases an den beiden Ende der Abgas-Verteilungsleitung lässt sich in einer bevorzugten Ausführungsform der Erfindung weitgehend oder gar vollständig unterbinden, indem wenigstens ein Abgasauslass als Abgas-Auslassöffnung ausgebildet wird, an welchem ein nach innen in die Abgas-Verteilungsleitung abstehendes Abgas-Ablenkelement vorgesehen ist. Dieses ist zum wenigstens teilweisen Ablenken des durch die Abgas-Verteilungsleitung strömenden Abgases zum jeweiligen Abgasauslass hin ausgebildet. Somit wird der das Abgas-Ablenkelement treffende Teil des die Abgas-Verteilungsleitung durchströmenden Abgas-Massenstroms durch Reflexion am Abgas-Abgaselement zum jeweiligen Abgasauslass hin abgelenkt. Im Ergebnis wird ein in etwa gleicher Massendurchsatz an Abgas durch die einzelnen Abgas-Auslässe hindurch erzielt.

In einer vorteilhaften Weiterbildung kann jede Abgas-Auslassöffnung von einem von der der Abgas-Verteilungsleitung gebildeten Öffnungsrand eingefasst sein. Im Querschnitt des Ansaugmoduls besitzt besagter Öffnungsrand einen von der Abgas-Zuführungsleitung abgewandten ersten sowie einen der Abgas-Zuführungsleitung zugewandten zweiten Randabschnitt. Im selben Querschnitt weist das entsprechende Ablenkelement einen ersten Endabschnitt, mittels welchem es am ersten Randabschnitt abgebracht ist, und einen zweiten, freien Endabschnitt auf, welcher nach innen in die Abgas-Verteilungsleitung und zur Abgaszuführungsleitung hin vom Öffnungsrand absteht. Dies impliziert eine vorteilhafte, zur Abgas-Zuführungsleitung achsensymmetrische Anordnung der Abgas-Ablenkelemente derart, dass deren freies Ende zur Abgas-Zuführungsleitung weist.

Simulationsrechnungen haben gezeigt, dass eine besonders gleichmäßige Verteilung des durch die Abgas-Verteilungsleitung strömenden Abgases über die verschiedenen Abgasauslässe in die Durchmischungskammer genau dann erreicht wird, wenn im Querschnitt des Ansaugmoduls jedes Abgas-Ablenkelement mit einer die jeweilige Auslassöffnung definierende und die beiden Randabschnitte verbindenden virtuellen Verbindungsgeraden einen spitzen Winkel, vorzugsweise von 35° bis 55°, höchst vorzugsweise von 45°, ausbildet.

Technisch besonders einfach zu realisieren sind in diesem Zusammenhang Abgas-Auslassöffnungen, die etwa eine runde, insbesondere kreisrunde, eine elliptische, eine vieleckige, vorzugsweise eine rechteckige, höchst vorzugsweise eine quadratische, Öffnungskontur oder eine Kombination aus diesen Konturen, insbesondere eine Kombination aus einem Rechteck und einem Halbrund, aufweisen.

In einer anderen bevorzugten Ausführungsform ist durch eine orthogonal sowohl zur Längs- als auch zur Querrichtung verlaufende Richtung eine Hochrichtung des Ansaugmoduls definiert. In diesem Szenario ist der Fluiddurchlass auf einem die Abgas-Verteilungsleitung in Hochrichtung begrenzenden oberen Wandabschnitt der Abgas-Verteilungsleitung vorgesehen. Dies ermöglicht die Zuführung von Abgas über die Abgas-Zuführungsleitung von oben in die Abgas-Verteilungsleitung.

Als aus fertigungstechnischer Sicht besonders vorteilhaft erweist sich eine Ausführungsform, bei welcher die Abgas-Zuführungsleitung zumindest abschnittsweise in der Hochrichtung vom oberen Wandabschnitt der Abgas-Verteilungsleitung absteht.

Der für das erfindungsgemäße Ansaugmodul benötigte Bauraum lässt sich weiter verringern, wenn die Abgas-Verteilungsleitung als Abgasrohr mit einer Umfangswand ausgebildet wird, in welchem die Abgasauslässe und der Fluiddurchlass vorgesehen sind. Darüber hinaus ergeben sich bei einer solchen, rohrartigen Realisierung auch beträchtliche Kostenvorteile bei der Herstellung.

In einer besonders bevorzugten Ausführungsform kann - zur verbesserten Gleichverteilung des Abgases mit Frischluft - in der Abgas-Verteilungsleitung entlang der Querrichtung auf Höhe des Fluiddurchlasses ein zusätzlicher Abgasauslass vorgesehen werden.

Um in den oben beschriebenen Szenarien die Durchmischung von Frischluft und Abgas weiter zu verbessern, empfiehlt sich die Anbringung von wenigstens einem Ablenkelement in der Durchmischungskammer, und zwar bzgl. der Strömungsrichtung der Frischluft zwischen Lufteinlass und Abgas-Verteilungsleitung. Die Platzierung eines solchen Ablenkelements, beispielsweise in der Art eines Schildes, sollte derart erfolgen, dass es wenigstens einen Teil der in die Durchmischungskammer eingebrachten Luft ablenkt, bevor sie auf das in die Durchmischungskammer eingebrachte Abgas trifft. Hinsichtlich des Durchmischungsprozesses lassen sich besonders gute Ergebnisse erzielen, wenn das besagte Ablenkelement gleichzeitig eine Ablenkung des Abgases bewirkt, bevor dieses auf die Frischluft trifft. Besonders zweckmäßig bietet es sich an, das Ablenkelement so auszugestalten, dass es die in die Durchmischungskammer eingeleitete Frischluft kanalisiert, bevor diese mit Abgas vermischt wird.

Bei einer vorteilhaften Weiterbildung sind der Lufteinlass und der Abgasauslass im Querschnitt des Ansaugmoduls einander zugewandt. Im Querschnitt des Ansaugmoduls kann das das Ablenkelement eine zum Luftauslass hin gekrümmte, vorzugsweise kreissegmentartige, Geometrie aufweisen. Dies bewirkt die gewünschte Kanalisierung der Strömungsrichtung des in die Durchmischungskammer eingebrachten Abgases, bevor es auf Frischluft trifft. In diesem Szenario besitzen Frischluft und Abgas zwar beim Einleiten in die Durchmischungskammer im Wesentlichen entgegengesetzte Strömungsrichtungen, nicht jedoch beim eigentlichen Aufeinandertreffen von Abgas- und Frischluftmolekülen in der Durchmischungskammer. Die störende Ausbildung von Wirbelströmungen, die den Luft- bzw. Abgasmassendurchsatz durch das Saugmodul unerwünschterweise zu verringern vermögen, wird auf diese Weise weitgehend ausgeschlossen.

In einer weiteren bevorzugten Ausführungsform weist die Durchmischungskammer ein Gehäuse auf, in welchem der Lufteinlass vorgesehen ist. Der Lufteinlass ist dabei vorzugsweise derart an einer ersten Gehäusewand des Gehäuses angeordnet, so dass dieser wenigstens einem Fluidauslass gegenüberliegt, welcher entsprechend an einer zweiten Gehäusewand vorgesehen ist. Typischerweise ist am Gehäuse nicht nur ein einziger solcher Fluidauslass vorhanden; vorzugsweise ist vielmehr eine Mehrzahl von Fluidauslässen vorgesehen, welche einer Anzahl an Zylindern der das Ansaugmodul verwendenden Brennkraftmaschine entspricht, so dass also jeder Fluidauslass einem bestimmten Zylinder der Brennkraftmaschine zugeordnet ist. Besonders bevorzugt sind jedem Zylinder genau zwei solche Fluidauslasse zugeordnet, d.h. die Anzahl an Fluidauslässen beträgt das Zweifache der Zylinderzahl. Der Lufteinlass und der wenigstens eine Fluidauslass können sich entlang der Längsrichtung gegenüberliegen.

Die Erfindung betrifft ferner eine Brennkraftmaschine mit wenigstens zwei Zylindern sowie mit einem mit den Zylindern zusammenwirkenden Ansaugmodul mit einem oder mehreren der vorangehend genannten Merkmale.

Als bevorzugt mag eine Ausführungsform erachtet werden, bei welcher die Anzahl an Zylindern der Anzahl an Abgasauslässen entspricht, so dass jedem Zylinder genau ein Abgasauslass zugeordnet ist.

Die Erfindung betrifft schließlich Kraftfahrzeug mit einer Fahrzeugkarosserie sowie mit einer Brennkraftmaschine mit einem oder mehreren der vorangehend genannten Merkmale.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Beispiel eines erfindungsgemäßen Ansaugmoduls,
- Fig. 2: eine Detaildarstellung der Abgas-Verteilungsleitung des Ansaugmoduls der Figur 1,
- Fig. 3a/b: eine Detaildarstellung der Abgas-Verteilungsleitung der Figur 2 im Bereich eines Abgasauslasses,
- Fig. 4a-c: Beispiele für eine mögliche geometrische Formen einer Abgas-Auslassöffnung,
- Fig. 5: eine Variante des Beispiels der Figur 1 mit einem Ablenkelement zum Ablenken von in die Durchmischungskammer eingebrachtem Abgas,
- Fig. 6a/b: das Ansaugmodul der Figur 1 in einer perspektivischen Ansicht bzw. in einem orthogonal zur Querrichtung Q verlaufenden Schnitt des Ansaugmoduls 1,
- Fig. 7: eine Draufsicht auf die Abgas-Verteilungsleitung entlang der Längsrichtung des Ansaugmoduls.

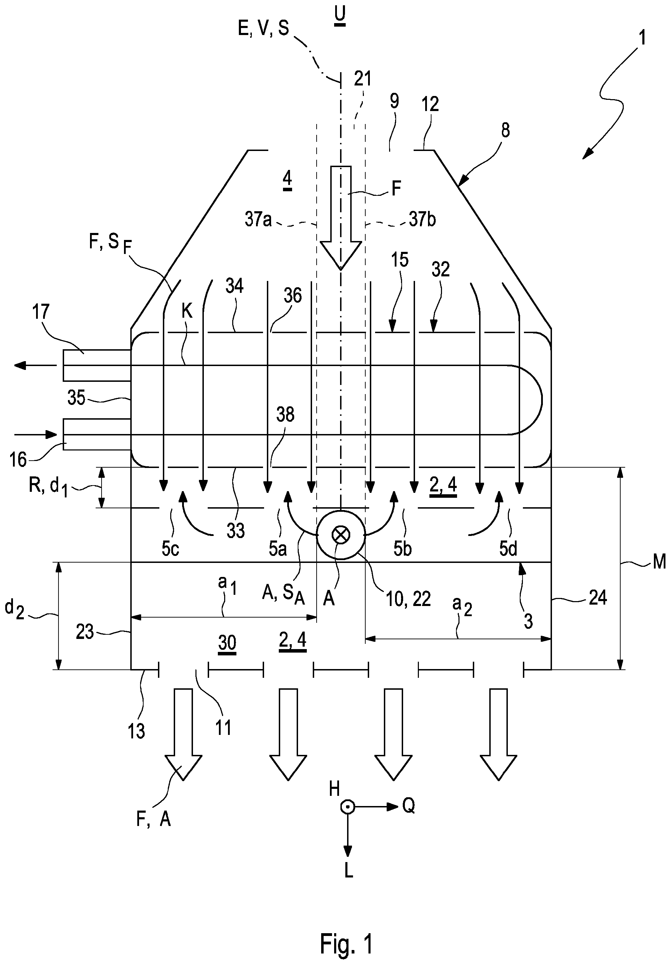

Figur 1 illustriert in einer schematischen Darstellung ein Beispiel eines erfindungsgemäßen Ansaugmodul 1 mit integrierter Abgasrückführung. Das Ansaugmodul 1 umfasst ein einen Gehäuseinnenraum 4 begrenzendes Gehäuse 8 aus einem Kunststoff. Das Gehäuse 8 umfasst eine erste Gehäusewand 12 mit wenigstens einem Lufteinlass 9 und eine zweite Gehäusewand 13 mit wenigstens einem Fluidauslass 11. Durch eine virtuelle Verbindungslinie V zwischen dem wenigstens einen Lufteinlass 9 und dem wenigstens einen Fluidauslass 11 wird eine Längsrichtung L definiert, welche einer Hauptdurchströmungsrichtung der durch den Gehäuseinnenraum 4 Frischluft F entspricht.

Über den Lufteinlass 9 kann die Frischluft F in den Gehäuseinnenraum 4 eintreten. Im Gehäuseinnenraum 4 ist ein Ladeluftkühler 15 angeordnet, welcher von der in den Gehäuseinnenraum 4 eingeleiteten Frischluft F durchströmt wird. Auf diese Weise wird die Frischluft F - bei dieser handelt es sich typischerweise um von einem Abgasturbolader komprimierte, heiße Ladeluft - vom Ladeluftkühler 15 gekühlt.

Das Ansaugmodul 1 besitzt ferner eine Durchmischungskammer 2, die Teil des Gehäuseinnenraums 4 ist und durch den Ladeluftkühler 15 und die zweite Gehäusewand 13 begrenzt wird. In der Durchmischungskammer 2 ist eine Abgas-Verteilungsleitung 3 angeordnet, welche sich entlang einer quer zur Längsrichtung L verlaufenden Querrichtung Q des Gehäuses 8 des Ansaugmoduls 1 erstreckt. In der Abgas-Verteilungsleitung 3 sind auf einer dem Lufteinlass 9 zugewandten Seite der Abgas-Verteilungsleitung 3 wenigstens ein erster und ein zweiter Abgasauslass 5a, 5b vorgesehen, mittels welchen das aus der Brennkraftmaschine abgeführte und die Abgas-Verteilungsleitung 3 durchströmende Abgas A in die Durchmischungskammer 2 einbringbar ist. Im Beispiel der Figur 1 sind exemplarisch vier solche Abgasauslässe 5a-5d dargestellt. Aufgrund ihrer hohen Steifigkeit empfiehlt sich eine Realisierung der Abgas-Verteilungsleitung 3 in Form eines Abgasrohrs. Selbstverständlich bieten sich aber abweichend von einer solchen Gestaltung in Form eines Rohrs auch andere geeignete Bauformen an.

Die Längsrichtung L kann in Varianten des Beispiels auch auf andere Weise definiert sein, etwa durch die Hauptströmungsrichtung der Frischluft F in der Durchmischungskammer 2, unmittelbar bevor die Frischluft F auf das aus der Abgas-Verteilungsleitung 3 in die Durchmischungskammer 2 eingeleitete Abgas A trifft.

Weiterhin umfasst das Ansaugmodul 1 einen an der Abgas-Verteilungsleitung 3 vorgesehenen und in der Art eines Durchbruchs 10 ausgebildeten Fluiddurchlass 22. Über diesen kommuniziert eine Abgas-Zuführungsleitung 21 fluidisch mit der Abgas-Verteilungsleitung 3. Über die Abgas-Zuführungsleitung 21 wird das aus der Brennkraftmaschine ausgestoßene und wieder in diese rückzuführende Abgas zunächst in die Abgas-Verteilungsleitung 3 und über diese in die Durchmischungskammer 2 eingeleitet. Auch die Abgas-Zuführungsleitung 21 kann, analog zur Abgas-Zuführungsleitung 3, als Abgasrohr ausgebildet sein. Dabei ist besagter Fluiddurchlass 22 bezüglich der Querrichtung Q im Wesentlichen mittig in der Abgas-Verteilungsleitung 3 angeordnet. Alternativ oder zusätzlich ist der Fluiddurchlass 22 bezüglich der Querrichtung Q auch im Wesentlichen mittig in der Durchmischungskammer 2 angeordnet.

In der Durchmischungskammer 2 des Ansaugmoduls 1 wird aus einer Brennkammer einer Brennkraftmaschine (nicht gezeigt) ausgestoßenes Abgas A zur Rückführung in die Brennkammer mit aus der Umgebung U angesaugter Frischluft F bzw. mit - typischerweise durch einen Abgasturbolader - aufgeladener Ladeluft durchmischt. Die Ladeluft bzw. Frischluft F wird dabei über den Lufteinlass 9 in die Durchmischungskammer 2 eingebracht.

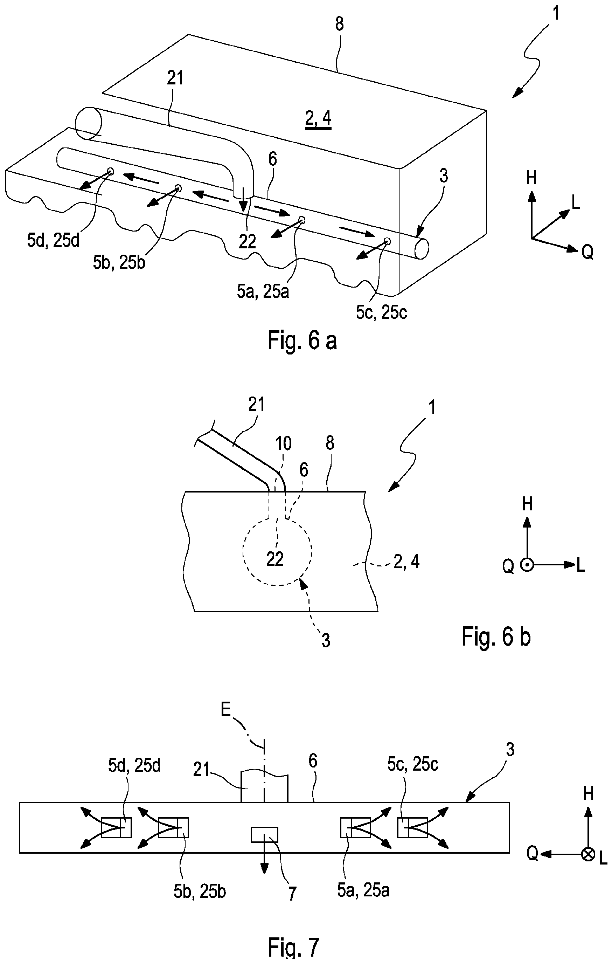

Die Mittellängsachse der Abgas-Zuführungsleitung 21 erstreckt sich vorzugsweise in einer Ebene E, die durch die Längsrichtung L und eine orthogonal sowohl zur Längs- als auch Hochrichtung L, Q erstreckende Hochrichtung H definiert ist. In der Ebene E liegt auch der Fluiddurchlass 22. Die Abgas-Zuführungsleitung 21 besitzt also auch eine Komponente in Hochrichtung H. Mit anderen Worten, die Abgas-Zuführungsleitung 21 erstreckt sich aus der Zeichenebene der Figur 1 heraus. Dies verdeutlicht etwa die perspektivische Darstellung der Figur 6b, welche nachfolgend noch genauer erläutert wird. Alternativ dazu kann sich die Abgas-Zuführungsleitung 21 auch in einer durch die Querrichtung Q und die Hochrichtung H definierten Ebene, in welcher der Fluiddurchlass 21 angeordnet, erstrecken (nicht gezeigt).

Entsprechend Figur 1 kann ein Abstand a₁ einer die Durchmischungskammer 2 in Querrichtung Q begrenzende dritte Gehäusewand 23 des Gehäuses 8 zu einer die Abgas-Zuführungsleitung 21 in Querrichtung Q begrenzenden und der dritten Gehäusewand 23 zugewandten Leitungswand 37a der Abgas-Zuführungsleitung 21 gleich einem Abstand a₂ einer der dritten Gehäusewand 23 gegenüberliegenden, vierten Gehäusewand 24 zu einer der Leitungswand 37a gegenüberliegenden Leitungsseite 37b der Abgas-Zuführungsleitung 21 sein.

In der Abgas-Verteilungsleitung 3 sind, wie bereits erläutert, vier Abgasauslässe 5a-5d vorgesehen, die entlang der Querrichtung Q im Abstand zueinander angeordnet sind und die Abgas-Verteilungsleitung 3 fluidisch mit der Durchmischungskammer 2 verbinden. Der Fluiddurchlass 22 ist in Querrichtung Q zwischen den Abgasauslässen 5a, 5c und den Abgasauslässen 5b, 5d angeordnet. In Varianten des Beispiels der Figur 1 kann auch eine andere Anzahl an Abgasauslässen 5a-5d an der Abgas-Verteilungsleitung 3 vorgesehen sein. Denkbar ist etwa, eine gerade Anzahl an Abgasauslässen 5a-5d und wenigstens vier solcher Abgasauslässe a-5d vorzusehen. Die Anordnung der Auslässe 5a-5d in der Abgas-Verteilungsleitung 3 kann dann derart erfolgen, dass ausgehend vom Fluiddurchlass 22 in und entgegen der Querrichtung Q jeweils dieselbe Zahl an Abgasauslässen vorgesehen werden. Auf diese Weise wird die erfindungswesentliche, symmetrische Anordnung der Auslässe 5a-5d relativ zum Fluiddurchlass 22 gewährleistet.

Entsprechend der Figur 1 wird durch die Längs- und die Querrichtung L, Q eine Querschnittsebene des Ansaugmoduls 1 definiert, in welcher die Abgas-Verteilungsleitung 3 und die Abgas-Zuführungsleitung 21 eine zur Abgas-Zuführungsleitung 21 symmetrische, insbesondere achsensymmetrische, Geometrie aufweisen. Dies bedeutet, dass die Abgas-Verteilungsleitung 3 und die Abgas-Zuführungsleitung 21 in der aus Längs- und Querrichtung L, Q gebildeten Querschnittsebene symmetrisch bzw. achsensymmetrisch, zu einer Symmetrieachse S angeordnet sein können, welche entlang der Längsrichtung L verläuft und die Abgas-Verteilungsleitung 3 bezüglich der Querrichtung Q mittig kreuzt. Die Symmetrieachse S kann auch durch eine virtuelle Gerade (nicht gezeigt) festgelegt sein, die parallel zur Längsrichtung verläuft und auf welcher der Fluiddurchlass 22 angeordnet ist. Die Abgas-Verteilungsleitung 3 und die Abgas-Zuführungsleitung 21 können in besagtem Querschnitt insbesondere eine umgekehrt-T-artige Geometrie aufweisen.

Typischerweise ist am Gehäuse 8 nicht nur ein einziger Fluidauslass 11 vorgesehen. Vielmehr entspricht die Anzahl an Fluidauslässen 11 bevorzugt der Anzahl an Zylindern der mit dem Ansaugmodul 1 zusammenwirkenden Brennkraftmaschine oder beträgt ein Zweifaches dieser Anzahl. Das in der Figur 1 exemplarisch gezeigte Ansaugmodul 1 mit vier Fluidauslässen 11 ist also zur Verwendung mit einer Brennkraftmaschine mit vier oder mit acht Zylindern konzipiert.

Für den Fachmann fertigungstechnisch besonders einfach gestaltet sich die Realisierung der Ladeluftkühlereinheit 15 in Form eines Kühlmittelrohrs. Ein solches Kühlmittelrohr kann stirnseitig jeweils einen Kühlmitteleinlass bzw. Kühlmittelauslass aufweisen. Technisch komplexere Varianten des Ladeluftkühlers 15 können hingegen als sogenannte Rohrbündelkühler oder Rippe-Rohr-Kühler ausgebildet sein. Ein solcher Ladeluftkühler 15 kann einen Kühlmittelpfad K aufweisen, der in Figur 1 nur grobschematisch skizziert ist und zur Kühlung der den Ladeluftkühler 15 durchströmenden Frischluft F von einem Kühlmittel durchströmt wird. Der Ladeluftkühler 15 kann ein Kühlergehäuse 32 aus Metall aufweisen. Das Kühlergehäuse 32 kann eine der Abgas-Verteilungsleitung 3 zugewandte Gehäusewand 33 umfassen, in welcher im Beispiel der Figur 1 exemplarisch acht Ladeluftauslässe 38 vorgesehen sind. Nach dem Durchströmen des Ladeluftkühlers 15 - hierzu kann die in den Gehäuseinnenraum 4 eingeleitete Frischluft F durch Ladelufteinlässe 36, die in einer der Gehäusewand 33 gegenüberliegenden Gehäusewand 34 des Kühlergehäuses 32 vorgesehen sind, in den Ladeluftkühler 15 eintreten - tritt die Frischluft F über die Ladeluftauslässe 38 wieder aus dem Ladeluftkühler 15 aus und in die Durchmischungskammer 2 ein. Der Ladeluftkühler 15 kann - bezüglich des Kühlmittelpfads K an einer stirnseitigen Gehäusewand 35 außerhalb der Durchmischungskammer 2 mit einem Kühlmitteleinlass 16 bzw. Kühlmittelauslass 17 zum Ein- bzw. Ausleiten von Kühlmittel in den bzw. aus dem Ladeluftkühler 15 versehen werden.

Um eine besonders gleichmäßige Vermischung der Frischluft F mit dem Abgas A zu erreichen, bietet es sich an, den Ladeluftkühler 15 bezüglich der Erstreckung des Kühlmittelpfads K im Wesentlichen parallel, also entlang der Querrichtung Q, zur Abgas-Zuführungsleitung 3 im Gehäuseinnenraum 4 anzuordnen. Entsprechend Figur 1 ist die Durchmischungskammer 2 zwischen der die Ladeluftauslässe 38 aufweisenden Gehäusewand 33 des Ladeluftkühlers 15 und der zweiten Gehäusewand 13 des Gehäuses 8 des Ansaugmoduls 1, in welcher die Fluidauslässe 11 angeordnet sind, ausgebildet. Somit ergibt sich in der Durchmischungskammer 2 eine Mischstrecke M innerhalb welcher sich die Frischluft mit dem Abgas A vermischen kann. Durch das im Gegenstromprinzip eingeblasene Abgas A strömt das Abgas A in Richtung des Ladeluftkühlers 15, wobei das Abgas eine Rückströmstrecke R zurücklegt. Somit verlängert sich die Mischstrecke M um die Länge der Rückströmstrecke R, wodurch eine verbesserte Vermischung der Gase F, A erzielt wird.

Die durch den Ladeluftkühler 15 hindurchgeführte gekühlte Frischluft weist durch in dem Ladeluftkühler 15 angeordnete Strömungsführungen (nicht gezeigt) beim Austritt aus dem Ladeluftkühler 15 eine sehr gleichmäßige, geradlinig gerichtete Strömung auf. Die im Gegenstrom auf den Ladeluftkühler 15 gerichtete Abgasströmung erreicht bei optimaler Auslegung den Ladeluftkühler 15, ohne dass das Abgas A in den Ladeluftkühler 15 eindringt. Somit ist ein unerwünschtes Verschmutzen des Ladeluftkühlers 15 verhindert. Weiterhin ist die Mischstrecke M, auf welcher eine Durchmischung der Frischluft F mit dem Abgas A erfolgt, vergrößert, was zu einer verbesserten Durchmischung der Gase führt.

Im Beispiel der Figur 1 ist ein Abstand d₁ zwischen der Abgas-Verteilungsleitung 3 und dem Ladeluftkühler 15 derart gewählt, dass das ausströmende Abgas A den Ladeluftkühler 15 gerade noch anströmt, jedoch nicht mehr in den Ladeluftkühler 15 eindringt. Somit legt das eingeleitete Abgas A die Distanzstrecke d₁ zwischen den Abgasauslässen 5a-5d und Ladeluftkühler 15 zwei Mal zurück, wobei sich das Abgas A beim Strömen entgegen der Ladeluftströmung bereits mit dieser vermischt und die Vermischung beim Zurückströmen bis zu der Abgas-Verteilungsleitung 3 weiterschreitet. In dem Bereich 30 stromab der Abgas-Verteilungsleitung 3 vermischt sich das Abgas A weiterhin mit der Frischluft F, wodurch eine sehr homogene Durchmischung erreicht wird, bevor das Gasgemisch durch die zu den einzelnen Zylinder führenden Fluidauslässe 11 strömt. Im Ergebnis wird eine unerwünschte Verunreinigung des Ladeluftkühlers 15 verhindert und eine maximale Mischstrecke mit einer homogenen Durchmischung der Gase gebildet.

Bei besonderen Ausgestaltungen beträgt der Abstand d₁ zwischen der Abgas-Verteilungsleitung 3 und dem Ladeluftkühler 15 ca. 2cm bis - 15 cm, vorzugsweise ca. 4 bis 5 cm.

Die Einleitung des Abgases A in die Durchmischungskammer 2 des Ansaugmoduls 1 erfolgt mit einer Strömungsrichtung S_{A} entgegengesetzt zur Strömungsrichtung S_{F} der Frischluft F. Dies gestattet eine gegenüber herkömmlichen Ansaugmodulen verbesserte Durchmischung des Abgases A mit Frischluft F auch auf engstem Bauraum. Somit lässt sich die derart mit Abgas A durchmischte Frischluft F homogen in die Brennkraftmaschine einbringen, was deren Wirkungsgrad erheblich verbessert.

Um eine möglichst ausgeprägte Durchmischung von Frischluft F und Abgas A zu erzielen, empfiehlt es sich entsprechend Figur 1, die Abgas-Verteilungsleitung 3 derart im Gehäuse 8 zu platzieren, dass die Abgasauslässe 5a-5d dem Lufteinlass 9 zugewandt sind. Dann strömt das aus der Abgas-Verteilungsleitung 3 austretende Abgas A wie gewünscht in im Wesentlichen entgegengesetzter Richtung S_{A} zur Frischluft F in die Durchmischungskammer 2 hinein, was einen homogenen Durchmischungsprozess von Frischluft F und Abgas A begünstigt.

Wie in Figur 1 illustriert, verläuft die Strömungsrichtung S_{A} entgegengesetzt zur Strömungsrichtung S_{F}. Denn eine gute Durchmischung von Frischluft F mit Abgas A wird gerade erzielt, wenn Luft- und Abgasmoleküle unter einem Winkel von möglichst genau 180° aufeinander treffen. In diesem Fall bilden die beiden Richtungen S_{A}, S_{F} einen Winkel von 180° zueinander aus. Andere bevorzugte Winkelwerte für den Winkel zwischen den Strömungsrichtungen S_{A}, S_{F} können durch ein Winkelintervall von 160° bis 200 oder von 170° bis 190° definiert sein.

Vorzugsweise entspricht der Abstand d₁ zwischen der Abgas-Verteilungsleitung 3 und dem Ladeluftkühler 15 einem Abstand d₂ der Abgas-Verteilungsleitung 3 zur zweiten Gehäusewand 13, in der die Fluidauslässe 11 zu den Zylindern angeordnet sind (nicht gezeigt). Durch eine solche Ausgestaltung kann die Mischlänge in der Durchmischungskammer 2 wesentlich verlängert werden.

In dazu alternativen Varianten des Beispiels kann der Abstand d₁ zwischen der Abgas-Verteilungsleitung 3 und dem Ladeluftkühler 15 größer (nicht gezeigt) oder, wie in Figur 1 dargestellt, kleiner sein als der Abstand d₂ zwischen der Abgas-Verteilungsleitung 3 und besagter zweiter Gehäusewand 13. Entsprechend der Auslegung kann so eine Vervielfachung, z. B. Verdopplung oder Verdreifachung, der Mischlänge erreicht werden.

Zum Zwecke einer kostengünstigen Fertigung des erfindungsgemäßen Ansaugmoduls 1 können Ladeluftkühler 15 und Abgas-Verteilungsleitung 3 integral am Gehäuse 8 der Durchmischungskammer 3 ausgeformt werden. Alternativ dazu können Ladeluftkühler 15 und Abgas-Verteilungsleitung 3 aber auch mit dem Gehäuse 8 verschraubt oder verschweißt werden.

Im Beispiel der Figur 1 sind exemplarisch vier Abgas-Auslässe 5a-5d in der Abgas-Verteilungsleitung 3 vorgesehen. Selbstverständlich diese Anzahl als rein exemplarisch anzusehen. Bevorzugt ist eine Anzahl an Abgas-Auslassöffnungen vorgesehen, die größer ist als die Anzahl der Zylinder der das Ansaugmodul 1 verwendenden Brennkraftmaschine. Bevorzugt beträgt die Anzahl an Abgasauslässe 5a-5d ein Vielfaches der Zylinderzahl oder mehr. Beispielsweise ist die Verwendung von acht, aber auch von 16 Abgasauslässen vorstellbar, wenn das Ansaugmodul 1 bei einer Brennkraftmaschine mit vier Zylindern eingesetzt wird. Alternativ können jedoch auch beliebig viele, den einzelnen Zylindern nicht individuell zugeordnete Abgas-Auslassöffnungen 5a-5d vorgesehen sein.

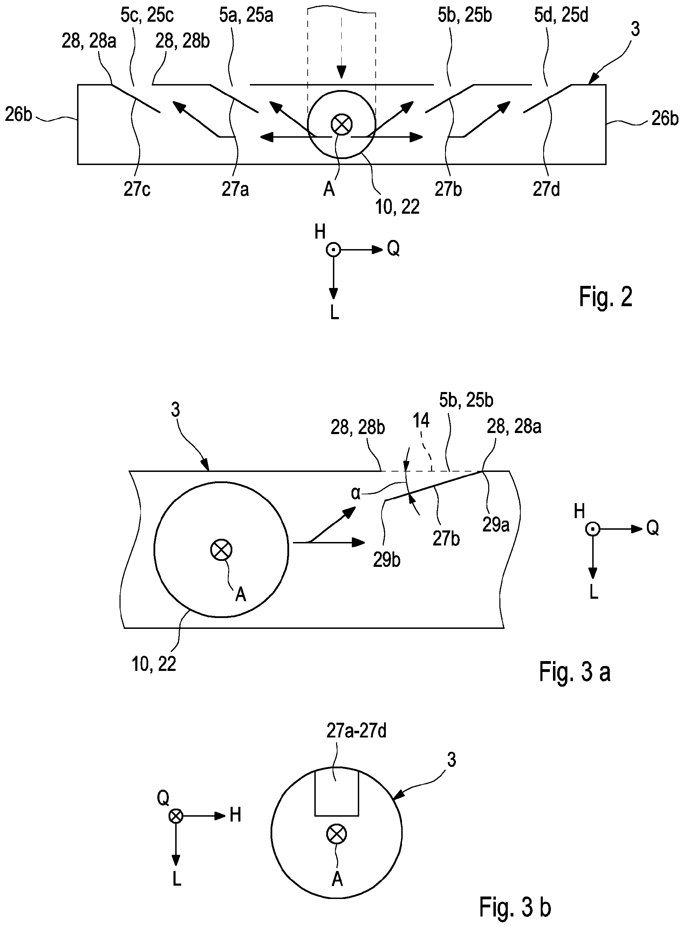

Figur 2 zeigt die Abgas-Verteilungsleitung 3 in einer separaten Darstellung. Man erkennt, dass die Abgasauslässe 5a-5d jeweils eine Abgas-Auslassöffnung 25a-25d mit einem nach innen in die Abgas-Verteilungsleitung 3 abstehenden Abgas-Ablenkelement 27a-27d umfassen. Die vier Abgas-Ablenkelemente 27a-27d dienen zum Ablenken des durch die Abgas-Verteilungsleitung 3 strömenden Abgases zu den ihnen zugeordneten Abgas-Auslassöffnungen 25a-d. Auf diese Weise wird ein unerwünschtes Aufstauen von Abgas A an den beiden Enden 26a, 26b der Abgas-Verteilungsleitung 3 und ein damit verbundene ungleichmäßige Verteilung des Abgases A auf die einzelnen Abgasauslässe 5a-5d weitgehend oder gar vollständig vermieden.

In Varianten des Beispiels kann an einzelnen Abgasauslässen 5a-5d, insbesondere an den den beiden Enden 26a, 26b der Abgas-Verteilungsleitung 3 in Querrichtung Q benachbarten Abgasauslässen 5a, 5d auf die gezeigten Abgas-Ablenkelemente 27a-27d verzichtet werden (nicht gezeigt).

Jede Abgas-Auslassöffnung 25a-25d wird von einem durch die Abgas-Verteilungsleitung 3 gebildeten Öffnungsrand 28 eingefasst, was im Folgenden anhand der Figur 3a, welche stellvertretend für alle Auslässe 5a-5d den Abgasauslass 5b der Figur 2 in einer Detaildarstellung zeigt, genauer erläutert werden soll. Die Figur 3b zeigt ergänzend zur Darstellung der Figur 3a die Abgas-Verteilungsleitung 3 in einem orthogonal zur Querrichtung Q definierten Querschnitt der Abgas-Verteilungsleitung 3.

In dem in Figur 3a dargestellten Längsschnitt der Abgas-Verteilungsleitung 3 entlang der Querrichtung Q besitzt der Öffnungsrand 28 einen von der Abgas-Zuführungsleitung 21 abgewandten ersten Randabschnitt 28a und einen der Abgas-Zuführungsleitung 3 zugewandten zweiten Randabschnitt 28b. Entsprechend weist das Ablenkelement 27b einen ersten Endabschnitt 29a auf, mittels welchem es am ersten Randabschnitt 28a des Öffnungsrands 28 abgebracht ist. Ein im Querschnitt dem ersten Endabschnitt 29a gegenüberliegender zweiter, freier Endabschnitt 29b des Abgas-Ablenkelements 27b steht nach innen in die Abgas-Verteilungsleitung 3 und zur Abgaszuführungsleitung 21 hin vom Öffnungsrand 28 ab. In dem in Figur 3a gezeigten Querschnitt des Ansaugmoduls 1 bildet das Abgas-Ablenkelement 27 mit einer die Auslassöffnung 25b definierenden und die beiden Randabschnitte verbindenden virtuellen Verbindungsgeraden 14 einen spitzen Winkel α von 45°. In Varianten des Beispiels sind selbstverständlich auch andere Winkelwerte möglich, so beispielsweise im Bereich zwischen 35° und 55°.

Die Abgas-Ablenkelemente 27a-27d können integral an der Abgas-Verteilungsleitung 3 ausgeformt sein.

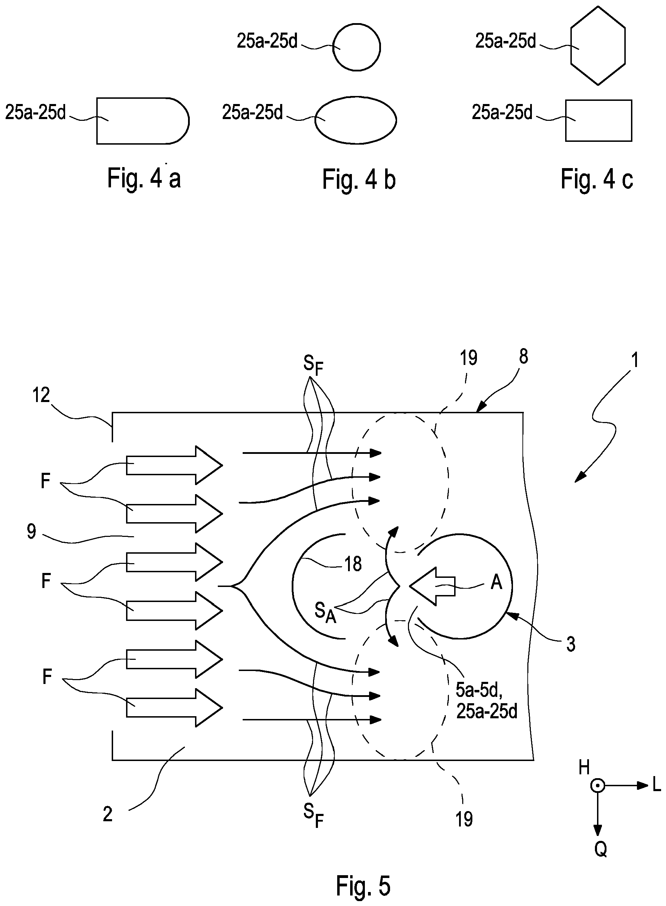

Hinsichtlich der geometrischen Ausgestaltung der Abgas-Auslassöffnungen 25a-25d bieten sich dem Fachmann verschiedene konstruktive Optionen, die exemplarisch in der grobschematischen Darstellung der Figur 4 gezeigt sind. Technisch besonders einfach zu realisieren sind Abgas-Auslassöffnungen 25a-25d, die etwa eine runde, insbesondere kreisrunde, oder eine elliptische Öffnungskontur aufweisen, vgl. hierzu Figur 4b. Alternativ empfiehlt sich eine in der Figur 4c gezeigte Realisierung mit einer vieleckigen Öffnungskontur, so beispielsweise einer rechteckige und dabei insbesondere einer quadratische Öffnungskontur. Auch eine in der Figur 4a gezeigte Kombination aus einem Rechteck und einem Halbrund ist denkbar.

Um die vorliegend erläuterte Durchmischung von Frischluft F und Abgas A weiter zu verbessern, empfiehlt sich die in Figur 5 schematisch illustrierte Anbringung eines Ablenkelements 18 in der Durchmischungskammer 2, und zwar in Strömungsrichtung S_{F} der Frischluft F zwischen Lufteinlass 9 und Abgas-Verteilungsleitung 3, vergleiche hierzu Fig. 1. Die Platzierung eines solchen Ablenkelements 18, beispielsweise in der Art eines Schildes, mag etwa derart erfolgen, dass es wenigstens einen Teil der in die Durchmischungskammer 3 eingebrachten Frischluft F ablenkt, bevor diese auf das Abgas A trifft.

Das Ablenkelement 18 weist in dem in Figur 5 gezeigten Längsschnitt der Abgasleitung3 entlang der Querrichtung Q die Form eines Kreissegments auf und bewirkt eine Ablenkung des in die Durchmischungskammer 3 eingebrachten Abgases A. Dabei wird die Frischluft F zu Randbereichen des Gehäuses 8 hin kanalisiert. Folglich besitzen Frischluft F und Abgas A zwar beim Einleiten in die Durchmischungskammer 2 entgegengesetzte Strömungsrichtungen S_{F}, S_{A} auf, aufgrund der ablenkenden Eigenschaften des Ablenkelements 18 jedoch nicht jedoch beim eigentlichen Aufeinandertreffen in der Durchmischungskammer 2 in dem in Figur 5 mit 19 bezeichneten Bereich.

Entsprechend Figur 5 kann das Ablenkelement 18 generell eine zum jeweiligen Abgasauslass 5a-5d hin gekrümmte, beispielsweise kreissegmentartige, Geometrie aufweisen. Die Ausbildung von Wirbelströmungen, die den Luft- bzw. Abgasmassendurchsatz durch das Saugmodul 1 auf unerwünschte Weise verringern können, wird auf diese Weise weitgehend vermieden.

Die Figur 6a zeigt das erfindungsgemäße Ansaugmodul 1 in einer perspektivischen Ansicht, die Figur 6b in einem Längsschnitt entlang der Längsrichtung L des Ansaugmoduls 1. Durch eine orthogonal sowohl zur Längs- als auch zur Querrichtung L, Q verlaufende Richtung wird eine Hochrichtung H des Ansaugmoduls definiert. Wie Figur 6a erkennen lässt, ist der Fluiddurchlass 22 auf einem die Abgas-Verteilungsleitung 3 in Hochrichtung H begrenzenden oberen Wandabschnitt 6 der Abgas-Verteilungsleitung 3 vorgesehen. Der Figur 6b entnimmt man, dass die Abgas-Zuführungsleitung 21 zumindest abschnittsweise in der Hochrichtung H vom oberen Wandabschnitt 6 der Abgas-Verteilungsleitung 3 abstehen kann.

Optional kann in der Abgas-Verteilungsleitung 3 entlang der Querrichtung Q im Bereich des Fluiddurchlasses 22 zwischen den Abgasauslässen 5a-5d ein zusätzlicher Abgasauslass 7 vorgesehen sein. Dies illustriert die Darstellung der Figur 7, welche die Abgas-Verteilungs-leitung 3 in einer Draufsicht entlang der Längsrichtung L zeigt. Man erkennt, dass der zusätzliche Abgasauslass 10 bezüglich der Hochrichtung H relativ zu den vier Abgasauslässen 5a-5d nach unten versetzt zu diesen angeordnet sein kann.

## Patentansprüche

1. Ansaugmodul (1) mit integrierter Abgasrückführung,
- mit einem einen Gehäuseinnenraum (4) begrenzenden Gehäuse (8), welches eine erste Gehäusewand (12) mit wenigstens einem Lufteinlass (9) und eine zweite Gehäusewand (13) mit wenigstens einem Fluidauslass (11) aufweist,
- mit einem im Gehäuseinnenraum (4) angeordneten Ladeluftkühler (15),
- mit einer Durchmischungskammer (2), die Teil des Gehäuseinnenraums (4) ist und durch den Ladeluftkühler (15) und die zweite Gehäusewand (13) begrenzt ist,
- mit einer in der Durchmischungskammer (2) angeordneten Abgas-Verteilungsleitung (3), welche sich entlang einer Querrichtung (Q) erstreckt, wobei in der Abgas-Verteilungsleitung (3) auf einer dem Lufteinlass (9) zugewandten Seite der Abgas-Verteilungsleitung (3) wenigstens ein erster und ein zweiter Abgasauslass (5a-5d) vorgesehen sind, mittels welchen das aus der Brennkraftmaschine abgeführte und die Abgas-Verteilungsleitung (3) durchströmende Abgas (A) in die Durchmischungskammer (2) einbringbar ist,
- mit einer fluidisch über einen an der Abgas-Verteilungsleitung (3) vorgesehenen Fluiddurchlass (22) mit dieser verbundenen Abgas-Zuführungsleitung (21),
**dadurch gekennzeichnet, dass**
- der Fluiddurchlass (22) bezüglich der Querrichtung (Q) im Wesentlichen mittig in der Abgas-Verteilungsleitung (3) und/oder in der Durchmischungskammer (2) angeordnet ist,
- der Ladeluftkühler (15) und die Abgas-Verteilungsleitung (3) derart im Gehäuse (8) angeordnet sind, dass die Strömungsrichtung (S_{A}) des in die Durchmischungskammer (2) eingebrachten Abgases (A) im Wesentlichen entgegengesetzt zur Strömungsrichtung (S_{F}) der in die Durchmischungskammer (2) eingebrachten Frischluft (F) verläuft, so dass die beiden Richtungen (S_{A}, S_{F}) einen Winkel von im Wesentlichen 180° zueinander bilden.

2. Ansaugmodul nach Anspruch 1,
**dadurch gekennzeichnet, dass**
- durch eine virtuelle Verbindungslinie zwischen dem wenigstens einen Lufteinlass (9) und dem wenigstens einen Fluidauslass (11) eine Längsrichtung (L) definiert ist, wobei die Querrichtung (Q) orthogonal zur Längsrichtung (L) verläuft,
- sich die Abgas-Zuführungsleitung (21) entweder in einer Ebene (E) erstreckt, die durch die Längsrichtung (L) und eine orthogonal sowohl zur Längs- als auch Querrichtung (L, Q) erstreckende Hochrichtung (H) definiert ist und in welcher der Fluiddurchlass (22) angeordnet ist, oder dass sich die Abgas-Zuführungsleitung (21) in einer durch die Querrichtung (Q) und die Hochrichtung (H) definierten Ebene erstreckt, in welcher der Fluiddurchlass (22) angeordnet ist.

3. Ansaugmodul nach Anspruch 1 oder 2,
der Ladeluftkühler (15) und die Abgas-Verteilungsleitung (3) derart im Gehäuse (8) angeordnet sind, dass das in die Durchmischungskammer (2) eingebrachte Abgas (A) gerade nicht mehr in den Ladeluftkühler (15) eintritt.

4. Ansaugmodul nach einem der vorhergehenden Ansprüche,
**dadurch gekennzeichnet, dass**
ein Abstand (d₁) zwischen der Abgas-Verteilungsleitung (3) und dem Ladeluftkühler (15) im Wesentlichen gleich dem einem Abstand (d₂) zwischen der Abgas-Verteilungsleitung (3) und der zweiten Gehäusewand (3) ist oder größer oder kleiner als dieser Abstand (d₂) ist.

5. Ansaugmodul nach einem der vorangehenden Ansprüche,
**dadurch gekennzeichnet, dass**
der Ladeluftkühler (15) als Rohrbündelkühler oder als Rippe-Rohr-Kühler mit wenigstens einem Kühlmittelpfad (K) ausgebildet ist, welcher an einer stirnseitigen Gehäusewand (23) einen Kühlmitteleinlass (16) und einen Kühlmittelauslass (17) aufweist und bezüglich des Kühlmittelpfads (K) im Wesentlichen parallel zur Abgas-Verteilungsleitung (3) in der Durchmischungskammer (2) angeordnet ist.

6. Ansaugmodul nach einem der vorangehenden Ansprüche,
**dadurch gekennzeichnet, dass**
der Fluiddurchlass (22) in Querrichtung (Q) zwischen dem ersten und dem zweiten Abgasauslass (5a, 5b) angeordnet ist.

7. Ansaugmodul nach einem der vorangehenden Ansprüche,
**dadurch gekennzeichnet, dass**
eine gerade Anzahl an Abgasauslässen (5a-5d) und wenigstens vier solcher Abgasauslässe (5a-5d) in der Abgas-Verteilungsleitung (3) vorgesehen sind, wobei in der Abgas-Verteilungsleitung (3) ausgehend vom Fluiddurchlass (21) in und entgegen der Querrichtung (Q) jeweils dieselbe Anzahl an Abgasauslässen (5a-5d) vorgesehen ist.

8. Ansaugmodul nach einem der vorangehenden Ansprüche,
**dadurch gekennzeichnet, dass**
- durch die Längs- und die Querrichtung (L, Q) ein Querschnitt des Ansaugmoduls (1) definiert ist,
- die Abgas-Verteilungsleitung (3) und die Abgas-Zuführungsleitung (21) und die Abgas-Auslässe (5a-5d) in diesem Querschnitt symmetrisch, insbesondere achsensymmetrisch, zu einer Symmetrieachse angeordnet sind, welche entlang der Längsrichtung (L) verläuft und die Abgas-Verteilungsleitung (3) bezüglich der Querrichtung (Q) mittig kreuzt.

9. Ansaugmodul nach einem der vorhergehenden Ansprüche,
**dadurch gekennzeichnet, dass**
der Fluiddurchlass (22) auf einem die Abgas-Verteilungsleitung (3) in der Hochrichtung (H) begrenzenden oberen Wandabschnitt (6) der Abgas-Verteilungsleitung (3) vorgesehen ist.

10. Ansaugmodul nach Anspruch 9,
**dadurch gekennzeichnet, dass**
die Abgas-Zuführungsleitung (21) zumindest abschnittsweise in der Hochrichtung (H) vom oberen Wandabschnitt (6) der Abgas-Verteilungsleitung (3) absteht.

11. Ansaugmodul nach einem der vorhergehenden Ansprüche,
**dadurch gekennzeichnet, dass**
in der Abgas-Verteilungsleitung (3) entlang der Querrichtung (Q) auf Höhe des Fluiddurchlasses ein zusätzlicher Abgasauslass (7) vorgesehen ist.

## Claims

1. Intake (1) with integrated exhaust gas recirculation,
- with a housing (8) limiting a housing interior (4), which has one first housing wall (12) with at least one air inlet (9) and one second housing wall (13) with at least one fluid outlet (11),
- with an intercooler (15) disposed in the housing interior (4),
- with an intermixing chamber (2) which is part of the housing interior (4) and is limited by the intercooler (15) and the second housing wall (13),
- with an exhaust gas distribution line (3) disposed in the intermixing chamber (2), extending along a perpendicular direction (Q), wherein in the exhaust gas distribution line (3) on a side of the exhaust gas distribution line (3) facing the air inlet (9) are provided at least one first and one second exhaust gas outlet (5a-5d) by means of which the exhaust gas (A) drawn out of the internal combustion machine and flowing through the exhaust gas distribution line (3) can be brought into the intermixing chamber (2),
- with an exhaust gas supply line (21) fluidically connected with the exhaust gas distribution line (3) via a fluid passage (22) provided at same,
**characterised in that**
- the fluid passage (22) is disposed with respect to the perpendicular direction (Q) substantially centrally in the exhaust gas distribution line (3) and/or in the intermixing chamber (2),
- the intercooler (15) and the exhaust gas distribution line (3) are disposed in the housing (8) such that the flow direction (S_{A}) of the exhaust gas (A) introduced into the intermixing chamber (2) runs substantially in the opposite direction to the flow direction (S_{F}) of the fresh air (F) introduced into the intermixing chamber (2), so that the two directions (S_{A}, S_{F}) form an angle of substantially 180 ° to one another.

2. Intake module according to claim 1,
**characterised in that**
- a longitudinal direction (L) is defined by a virtual connection line between the at least one air inlet (9) and the at least one fluid outlet (11), wherein the perpendicular direction (Q) extends orthogonally to the longitudinal direction (L),
- either the exhaust gas supply line (21) extends in a plane (E) which is defined by the longitudinal direction (L) and a height direction (H) extending orthogonally both in relation to the longitudinal direction and in relation to the perpendicular direction (L, Q) and in which the fluid passage (22) is disposed, or the exhaust gas supply line (21) extends in a plane defined by the perpendicular direction (Q) and the height direction (H) in which the fluid passage (22) is disposed.

3. Intake module according to claim 1 or 2,
the intercooler (15) and the exhaust gas distribution line (3) are disposed in the housing (8) such that the exhaust gas (A) introduced into the intermixing chamber (2) for the time being does not enter into the intercooler (15).

4. Intake module according to one of the preceding claims,
**characterised in that**
a distance (d₁) between the exhaust gas distribution line (3) and the intercooler (15) is substantially equal to the one distance (d₂) between the exhaust gas distribution line (3) and the second housing wall (3) or is larger or smaller than this distance (d₂).

5. Intake module according to one of the preceding claims,
**characterised in that**
the intercooler (15) is formed as a tube bundle cooler or as rib tube cooler with at least one coolant path (K), which has at a face-side housing wall (23) a coolant inlet (16) and a coolant outlet (17) and with respect to the coolant path (K) is disposed substantially parallel to the exhaust gas distribution line (3) in the intermixing chamber (2).

6. Intake module according to one of the preceding claims,
**characterised in that**
the fluid passage (22) is disposed in perpendicular direction (Q) between the first and the second exhaust gas outlets (5a, 5b).

7. Intake module according to one of the preceding claims,
**characterised in that**
an even number of exhaust gas outlets (5a-5d) and at least four such exhaust gas outlets (5a-5d) are provided in the exhaust gas distribution line (3), wherein in the exhaust gas distribution line starting from the fluid passage (21) and against the perpendicular direction (Q) is provided in each case the same number of exhaust gas outlets (5a-5d).

8. Intake module according to one of the preceding claims,
**characterised in that**
- by the longitudinal direction and the perpendicular direction (L, Q) is defined a cross-section of the intake module (1),
- the exhaust gas distribution line (3) and the exhaust gas supply line (21) and the exhaust gas outlets (5a-5d) in this cross-section are disposed symmetrically, in particular axially symmetrically, to a symmetry axis, which extends along the longitudinal direction (L) and crosses the exhaust gas distribution line (3) with respect to the perpendicular direction (Q).

9. Intake module according to one of the preceding claims,
**characterised in that**
the fluid passage (22) is provided on an upper wall section (6) of the exhaust gas distribution line (3) limiting the exhaust gas distribution line (3) in the height direction (H).

10. Intake module according to claim 9,
**characterised in that**
the exhaust gas supply line (21) projects at least sectionally in the height direction (H) from the upper wall section (6) of the exhaust gas distribution line (3).

11. Intake module according to one of the preceding claims,
**characterised in that**
in the exhaust gas distribution line (3) along the perpendicular direction (Q) is provided at the level of the fluid passage an additional exhaust gas outlet (7).

## Revendications

1. Module d'aspiration (1) avec recirculation de gaz d'échappement intégrée,
- avec un boîtier (8) limitant un intérieur de boîtier (4), lequel présente une première paroi de boîtier (12) avec au moins une entrée d'air (9) et une deuxième paroi de boîtier (13) avec au moins une sortie de fluide (11),
- avec un refroidisseur d'air de suralimentation (15) agencé dans l'intérieur de boîtier (4),
- avec une chambre de mélange (2), qui fait partie de l'intérieur de boîtier (4) et est limitée par le refroidisseur d'air de suralimentation (15) et la deuxième paroi de boîtier (13),
- avec une conduite de distribution de gaz d'échappement (3) agencée dans la chambre de mélange (2), laquelle s'étend le long d'un sens transversal (Q), dans lequel au moins une première et une deuxième sortie de gaz d'échappement (5a-5d) sont prévues dans la conduite de distribution de gaz d'échappement (3) sur un côté de la conduite de distribution de gaz d'échappement (3) tourné vers l'entrée d'air (9), au moyen desquelles le gaz d'échappement (A) évacué du moteur à combustion interne et traversant la conduite de distribution de gaz d'échappement (3) peut être introduit dans la chambre de mélange (2),
- avec une conduite d'alimentation de gaz d'échappement (21) reliée fluidiquement par le biais d'un passage de fluide (22) prévu au niveau de la conduite de distribution de gaz d'échappement (3) à celui-ci,
**caractérisé en ce que**
- le passage de fluide (22) est agencé par rapport au sens transversal (Q) sensiblement au milieu dans la conduite de distribution de gaz d'échappement (3) et/ou dans la chambre de mélange (2),
- le refroidisseur d'air de suralimentation (15) et la conduite de distribution de gaz d'échappement (3) sont agencés dans le boîtier (8) de telle sorte que le sens d'écoulement (S_{A}) du gaz d'échappement (A) introduit dans la chambre de mélange (2) s'étend de manière sensiblement opposée au sens d'écoulement (S_{F}) de l'air frais (F) introduit dans la chambre de mélange (2), si bien que les deux sens (S_{A}, S_{F}) forment un angle de sensiblement 180° l'un par rapport à l'autre.

2. Module d'aspiration selon la revendication 1,
**caractérisé en ce que**
- un sens longitudinal (L) est défini par une ligne de liaison virtuelle entre l'au moins une entrée d'air (9) et l'au moins une sortie de fluide (11), dans lequel le sens transversal (Q) s'étend orthogonalement au sens longitudinal (L),
- la conduite d'alimentation de gaz d'échappement (21) s'étend soit dans un plan (E), qui est défini par le sens longitudinal (L) et un sens de la hauteur (H) s'étendant orthogonalement aussi bien au sens longitudinal qu'au sens transversal (L, Q) et dans lequel le passage de fluide (22) est agencé, soit que la conduite d'alimentation de gaz d'échappement (21) s'étend dans un plan défini par le sens transversal (Q) et le sens de la hauteur (H), dans lequel le passage de fluide (22) est agencé.

3. Module d'aspiration selon la revendication 1 ou 2,
le refroidisseur d'air de suralimentation (15) et la conduite de distribution de gaz d'échappement (3) sont agencés dans le boîtier (8) de telle sorte que le gaz d'échappement (A) introduit dans la chambre de mélange (2) n'entre plus dans le refroidisseur d'air de suralimentation (15).

4. Module d'aspiration selon l'une quelconque des revendications précédentes,
**caractérisé en ce que**
une distance (d₁) entre la conduite de distribution de gaz d'échappement (3) et le refroidisseur d'air de suralimentation (15) est sensiblement égale à l'une distance (d₂) entre la conduite de distribution de gaz d'échappement (3) et la deuxième paroi de boîtier (3) et est supérieure ou inférieure à cette distance (d₂).

5. Module d'aspiration selon l'une quelconque des revendications précédentes,
**caractérisé en ce que**
le refroidisseur d'air de suralimentation (15) est réalisé en tant que refroidisseur de faisceau de tubes ou en tant que refroidisseur de tube nervure avec au moins un chemin de réfrigérant (K), lequel présente une entrée de réfrigérant (16) et une sortie de réfrigérant (17) au niveau d'une paroi de boîtier frontale (23) et est agencé par rapport au chemin de réfrigérant (K) de manière sensiblement parallèle à la conduite de distribution de gaz d'échappement (3) dans la chambre de mélange (2).

6. Module d'aspiration selon l'une quelconque des revendications précédentes,
**caractérisé en ce que**
le passage de fluide (22) est agencé dans le sens transversal (Q) entre la première et la deuxième sortie de gaz d'échappement (5a, 5b).

7. Module d'aspiration selon l'une quelconque des revendications précédentes,
**caractérisé en ce que**
un nombre pair de sorties de gaz d'échappement (5a-5d) et au moins quatre de ces sorties de gaz d'échappement (5a-5d) sont prévus dans la conduite de distribution de gaz d'échappement (3), dans lequel respectivement le même nombre de sorties de gaz d'échappement (5a-5d) est prévu dans la conduite de distribution de gaz d'échappement (3) partant du passage de fluide (21) dans et à l'opposé du sens transversal (Q).

8. Module d'aspiration selon l'une quelconque des revendications précédentes,
**caractérisé en ce que**
- une section transversale du module d'aspiration (1) est définie par le sens longitudinal et le sens transversal (L, Q),
- la conduite de distribution de gaz d'échappement (3) et la conduite d'alimentation de gaz d'échappement (21) et les sorties de gaz d'échappement (5a-5d) sont agencées dans cette section transversale de manière symétrique, en particulier symétrique axiale, par rapport à un axe de symétrie, lequel s'étend le long du sens longitudinal (L) et coupe la conduite de distribution de gaz d'échappement (3) au milieu par rapport au sens transversal (Q).

9. Module d'aspiration selon l'une quelconque des revendications précédentes,
**caractérisé en ce que**
le passage de fluide (22) est prévu sur une section de paroi supérieure (6) de la conduite de distribution de gaz d'échappement (3) limitant la conduite de distribution de gaz d'échappement (3) dans le sens de la hauteur (H).

10. Module d'aspiration selon la revendication 9,
**caractérisé en ce que**
la conduite d'alimentation de gaz d'échappement (21) fait saillie au moins par tronçon dans le sens de la hauteur (H) de la section de paroi supérieure (6) de la conduite de distribution de gaz d'échappement (3).

11. Module d'aspiration selon l'une quelconque des revendications précédentes,
**caractérisé en ce que**
une sortie de gaz d'échappement supplémentaire (7) est prévue dans la conduite de distribution de gaz d'échappement (3) le long du sens transversal (Q) à hauteur du passage de fluide.
